(19) Europäisches Patentamt
European Patent Office
Office européen des brevets

(11) **EP 4 197 760 A1**

(12) **EUROPÄISCHE PATENTANMELDUNG**

(43) Date of publication:
**21.06.2023 Bulletin 2023/25**

(21) Application number: **21215725.9**

(22) Date of filing: **17.12.2021**

(51) International Patent Classification (IPC):
**B29C 70/88** *(2006.01)*    **G01N 27/02** *(2006.01)*
**G01N 27/04** *(2006.01)*    **B29C 35/02** *(2006.01)*
**B29C 70/54** *(2006.01)*

(52) Cooperative Patent Classification (CPC):
**B29C 70/88; B29C 35/0288; B29C 70/54;**
**G01N 27/048; G01N 27/121; G01N 27/20;**
G01N 27/127

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Kompetenzzentrum Holz GmbH**
**4040 Linz (AT)**

(72) Inventors:
• **KHALIFA, Mohammed**
**9020 Klagenfurt (AT)**

• **MAHENDRAN, Arunjunai Raj**
**9020 Klagenfurt (AT)**
• **MÜLLER, Uwe**
**4225 Luftenberg (AT)**
• **LAMMER, Herfried**
**9300 St. Veit (AT)**

(74) Representative: **Burger, Hannes**
**Anwälte Burger & Partner**
**Rechtsanwalt GmbH**
**Rosenauerweg 16**
**4580 Windischgarsten (AT)**

(54) **METHOD FOR PRODUCING AND MONITORING STRUCTURAL COMPOSITE BODIES, AND STRUCTURAL COMPOSITE BODIES**

(57)    The invention pertains to a method for producing structural composite bodies comprising one or more thermoset polymer(s) with monitoring of curing during production, and for monitoring structural health of the structural composite bodies after production. The method comprises embedding of a sensor comprising a nano-structured, conductive material within a shaped body of a curable resin composition, curing the resin composition to produce a structural composite body, and thereby monitoring of the curing by means of the embedded sensor. The method further comprises monitoring of the structural health of a produced structural composite body by means of the sensor embedded therein. The invention also pertains to a structural composite body with a sensor arranged therein for monitoring of the structural health of the structural composite body.

Fig.3

EP 4 197 760 A1

## Description

The invention relates to a method for producing structural composite bodies comprising one or more thermoset polymer(s) with monitoring of curing during production, and for monitoring structural health of the structural composite bodies after production.

Regarding structural bodies and parts for various applications, composite materials increasingly replaced other common materials, like for example metals, in the past decades. Reasons for such use of composite materials instead of common materials amongst others are, that structural parts/bodies produced of composite materials often are less expensive, lighter, stronger and more durable as compared to structural bodies made of common materials. Typical examples for such structural bodies made of composite materials include boat hulls, swimming pool panels, racing car bodies, shower stalls, bathtubs, storage tanks, propellers and so on. Nowadays structural composite bodies and parts are also used in general automotive applications as well as in advanced applications such as in spacecraft and aircraft, thus in rather demanding environments.

Composite materials typically comprise a sort of reinforcement, like a filler material, very commonly a fibre material, and matrix or binder. Often thermoset polymer resins or thermosets serve as binder for production of composite parts or bodies, wherein the production process includes a shaping step and a curing step for the binder.

Such composite bodies typically serve as integral, load-bearing components within their intended application, and thus require a high level of control after production and/or during their live-time. The composite bodies or parts therefore may require a rather high level of control regarding possible defects introduced during production thereof or their actual use in the intended application. Therefore, composite bodies commonly are inspected for defects or failures immediately after production, and also at certain stages of their lifetime, such as during scheduled service cycles in certain time intervals. Such inspections usually comprise a rather time-consuming full scan of a composite part with external scanning equipment, such as for example acoustic or radar scan devices. Overall, inspecting a structural body for defects or failures is rather expensive and laborious undertaking. Thus, a need exists for more convenient methods for control of the production and structural health, respectively structural integrity of composite bodies.

An objective of the invention was to provide an inexpensive and easily feasible, yet highly effective method for producing structural composite bodies with a high level of control regarding the production process, the method also enabling an easy to execute, regular inspection of the structural health of the structural composite body during its lifetime or during its use. Another objective of the invention was to provide a structural composite body produced accordingly, which structural composite body enables an easy to execute, regular inspection of its structural health during its lifetime or use.

This objective is met by the method according to the claims.

Thus, there is provided a method for producing structural composite bodies comprising one or more thermoset polymer(s) with monitoring of curing during production, and for monitoring structural health, respectively structural integrity of the structural composite bodies after production, respectively during use of the structural composite bodies.

The method comprises providing a curable or thermosetting resin composition. Further the method comprises providing a sensor, wherein providing the sensor comprises coating or printing an aqueous composition comprising a nano-structured, conductive material onto a paper substrate, wherein the nano-structured, conductive material consists of a polyaniline-based polymer, or chemically modified or unmodified graphene nanoplatelets, or chemically modified or unmodified carbon nanotubes, and conductively connecting the nano-structured conductive material with two electrodes. Next the method comprises positioning or placing the sensor within a shaped body of the curable resin composition by shaping the curable resin composition and thereby surrounding the sensor with the curable resin composition. This surrounding of the sensor with the curable resin may involve a wetting, saturating and/or mixing the sensor with the curable resin composition. Then the method comprises curing the curable resin composition to produce a structural composite body, and thereby monitoring the curing by continuously or consecutively measuring an ion viscosity dependent impedance or resistance of the nano-structured, conductive material of the sensor during curing, by means of a measuring device for measuring impedance or resistance, which measuring device is conductively coupled with the two electrodes. And the method comprises after the curing, respectively any time after production of the structural composite body, monitoring the structural health of the structural composite body by continuously or consecutively measuring a moisture or humidity dependent impedance or resistance of the nano-structured, conductive material of the sensor by means of a measuring device for measuring impedance or resistance, which measuring device is conductively coupled with the two electrodes.

As the term *composite* implies, the structural composite body according to this specification may comprise or comprises one or more other component(s) apart from the sensor and the one or more thermoset polymers. In context with composites, such other components are typically designated as reinforcements, for example reinforcing particles or reinforcing fibre components are commonly used for structural composite bodies. Such reinforcing components may be applied during production basically in the same way as the sensor is applied. Thus, the method also may include or includes a step of positioning one or more reinforcement(s) within the shaped body of the curable resin composition by shaping the curable resin composition and thereby surrounding the one or more reinforcing component(s) with the curable resin composition. Just like in case of the sensor, such surrounding of the one or more reinforcing components with the curable resin may involve a wetting, saturating and/or mixing the one or more reinforcing components with the curable resin composition. Thereby any reinforcing component(s) known in the art may be used for producing the structural composite bodies.

Regarding the positioning of the sensor, the sensor may be placed in a specific position within the shaped body of the curable resin composition, such that the sensor is located within at an area within a structural composite body, which area is for example under high load during use of the structural composite body. The sensor may also be positioned at an area within the structural composite body, which is under particular high risk of defects or failure during use of the structural composite body. Since the sensor is used for monitoring of structural health of composite bodies, such positioning/placing of the sensor within a structural composite body is particularly useful, as an increase in moisture/humidity due to a defect in such particularly vulnerable area of a structural composite body, can very rapidly be detected by means of the sensor. The monitoring of structural health by means of the moisture dependent impedance or resistance of the nano-structured material of the method of this specification thus comprises a measuring of the water content in the immediate vicinity of the sensor. In general, the sensor is preferably positioned in vicinity of an outer perimeter of the structural composite bodies, within the structural composite bodies.

Practically any curable resin composition known in the art may be used for producing the structural composite bodies. Since the structural composite bodies may comprise one or more thermoset polymer(s), the curable resin composition therefore comprises at least one curable, thermosetting resin, which results in one thermoset polymer upon curing. The curable resin composition however may also contain more than one curable resin component, thus giving rise to production of structural composite bodies comprising more than one thermoset polymer. Examples for suitable thermosetting resins include but are not limited to polyester resins, polyurethanes, melamine resins and/or epoxy resins. The overall amount of thermoset polymer(s) of the structural composite bodies, and thus the overall amount of curable resin composition used to produce the structural composite bodies may vary widely, basically depending on desired properties and the intended application of a specific structural composite body. A suitable amount of curable resin composition in relation to the amount of reinforcement(s) used can be thereby selected based on common knowledge in the art.

The structural composite bodies may be produced in any shape desired and feasible. In this context, the structural composite bodies may also be produced by means of any technique known in the art. Examples for suitable techniques include but are not limited to hand layup, casting, one or two mould moulding, compression moulding, transfer moulding, autoclave moulding or vacuum infusion, just to name a few. All of these exemplary techniques as well as other known techniques not listed explicitly involve a shaping of resins and thereby surrounding of (reinforcing) components with the resins, as well as a hardening of the resins.

Within this specification, the terms *conductive* or *conductively* shall of course be understood as *in an electrically conductive manner.* In this context, the conductively connecting of the nano-structured conductive material with the two electrodes prior to positioning the sensor within the curable resin matrix means a connecting of the nano-structured, conductive material with the two electrodes in an electrically conductive manner. Also, the conductively coupling of the measuring device(s) with the two electrodes both for monitoring of the curing and the monitoring of structural health/integrity means, that the measuring device is coupled with the two electrodes in an electrically conductive manner.

The paper substrate may be of a typical cellulose-based paper type, for example a cellulose fibre-based paper type as used for printing applications. The paper substrate may however also include fibre materials other than cellulose fibres, as well as additional additives commonly known in the paper art. Preferably, the paper substrate is of a high porous type. By using a paper substrate coated or printed with actual active, conductive material, the sensor can also be fabricated in a great variety of shapes and sizes. Thus the shape and size of a specific sensor can be very well adapted to a specific shape and size of the structural composite body within which the senor is positioned.

Regarding poly aniline-based polymers, it is well known in the art, that these poly aniline-based polymers typically exhibit a nanorod-like morphology, so that the nano-structured, conductive material may consist of chemically modified or unmodified poly aniline nanorods.

The method allows for monitoring of the production process of the structural composite bodies on the one hand, but on the other hand also allows for monitoring the structural health/integrity after production at practically any time desired. The monitoring of curing as well as of structural health can be carried out without high effort, and thus the method provides a costand material-effective, easily implementable, yet highly effective way for monitoring of structural composite bodies or parts, since the monitoring can directly be carried out using the sensor embedded/integrated within the structural composite body itself, both during its production as well as any time during its actual use thereafter. Both the monitoring of the curing as well as the monitoring of structural health thereafter, i.e. after the production of the structural composite bodies and/or during their actual use, may be carried out continuously or by means of consecutive measurements. In this aspect, a monitoring of structural health/integrity may be carried out at any time after production of the structural composite bodies, for example during actual use of a certain structural composite body, or at any desired or scheduled time intervals, such as during service cycles.

In this context, the measuring device coupled to the electrodes for monitoring the structural health of a structural composite body may be the same as the measuring device used for the monitoring of the curing of the respective structural composite body. In such case, such measuring device may be permanently attached or linked to a respective structural composite body. It may however be more convenient, to conductively couple a measuring device with the two electrodes for measuring impedance or resistance of the nano-structured, conductive material separately for each time, when a monitoring is desired or scheduled, such as during service cycles as already mentioned above. In such case, a measuring device used for a specific monitoring of structural health may be a different one as used for any prior monitoring of structural health or the measuring device used for monitoring of the curing during production of the structural composite body.

The monitoring of the curing primarily allows for detection of incomplete curing reactions, which may result from any failure of the production equipment, for example may be caused by damaged or non-functional heating devices and so on. Since the monitoring with the sensor according to this specification allows for more or less real-time monitoring of the curing, any abnormal curing conditions can be detected very rapidly, thus helping to prevent a production of a high amount of reject bodies and/or a possible, actual use of defect structural composite bodies.

Surprisingly it was found that a sensor as specified within the embodiments of this specification is capable of surviving the harsh conditions of the curing under shaping of the curable resin composition, which shaping and curing typically involves high temperatures and may also involve strain and stress, like for example high pressures. It was possible to preserve the sensing capability of a sensor according to this specification after cuing at least to a high extend if not even fully, which will be demonstrated further below. In this regard, the flexible paper substrate is believed to support and stabilize the otherwise brittle nano-structured, conductive material, and helps preserving electrical conductivity properties of the nano-structured material coated or printed thereon.

Furthermore, it was astonishingly found, that the integration of the sensor does not negatively affect the mechanical properties of the structural composite bodies to a significant extend, but the integration of the paper substrate with the nano-structured, conductive material coated or printed thereon within the structural composite bodies can even enhance the mechanical properties of these structural composite bodies to a certain extend. Thus, a structural composite body with a sensor incorporated therein according to this specification, can be fully used in its intended application without negative impact on its actual application. In this regard, the very high flexibility of the sensor according to this specification is believed to be expedient for the embedding within the shaped bodies, respectively the structural composite bodies produced thereof by means of curing the curable resin composition.

An embodiment of the method may specifically comprise, that the sensor is provided or made by coating an aqueous composition comprising a polyaniline-based polymer as the nano-structured, conductive material onto the paper substrate and that the monitoring of the curing as well as the monitoring of the structural health is done by measuring the impedance of the polyaniline-based polymer.

Polyaniline-based polymers have proven to be particularly useful as active measuring material for monitoring both the curing reaction during production as well as the monitoring of structural health of the composite body thereafter. Measuring impedance with this type of nano-structured, conductive material, and thus using AC for the measurement, has been found to be highly effective regarding measuring parameters like high sensitivity, fast response and recovery, high selectivity and stability. Furthermore, very little of such polyaniline-based polymer has to be used in order to achieve the above advantages.

In a further embodiment, the method may also comprise, that the sensor is provided or made by coating an aqueous composition comprising polyaniline modified with a surfactant onto the paper substrate.

Surfactants are helpful tools to sort of tune the electrical properties of polyaniline-based polymers. Thus, the electrical properties of polyaniline-based materials, like for example sensitivity or response and recovery time, can be further enhanced by way of such measure.

In this context it may be particularly convenient to use sodium dodecyl sulfate as surfactant for modifying the polyaniline. Sodium dodecyl sulfate can also be designated sodium lauryl sulfate.

While also unmodified or otherwise modified polyaniline-based polymers are suitable for the method, very good results regarding the electrical properties have been achieved, when the polyaniline is modified with an amount of sodium dodecyl sulfate of 0,5 wt.% to 3 wt. %, preferably 1 wt.% to 2 wt.%, based on 100 wt.% total of modified polyanilin.

With regard to the preparation of the sensor, it can also be convenient to provide or make the sensor by coating an aqueous composition comprising the polyaniline-based polymer and a polymeric binder in a weight ratio of 4:1 to 6:1 onto the paper substrate.

This measure appears to help with the integration of the sensor within the structural composite body, respectively within the curable resin composition during production of the composite body. In particular, the use of such binder within the given amount range seems to enhance the bonding of the polyaniline to the paper substrate as well as to the thermosetting resin without interfering with or negatively influencing the electrical properties of the polyaniline in a significant extend.

In this respect polyethylene glycol can preferably be uses as the polymeric binder.

In another embodiment of the method, it may however also be convenient, that that the sensor is provided or made by coating or printing an aqueous composition comprising chemically modified or unmodified graphene nanoplatelets as nano-structured, conductive material, or by coating or printing an aqueous composition comprising chemically modified or unmodified carbon nanotubes as nano-structured, conductive material onto the paper substrate. Preferably the sensor may be provided or made by coating an aqueous composition of graphene nanoplatelets modified with a surfactant, most preferably graphene nanoplatelets modified with sodium dodecyl sulfate, onto the paper substrate, or by coating an aqueous composition comprising carbon nanotubes modified with a surfactant, most preferably carbon nanotubes modified with sodium dodecyl sulfate onto the paper substrate.

These types of nano-structured, conductive materials have also been proven to be well suited materials for monitoring both curing during production as well as monitoring the structural integrity of structural composite bodies after their production. Both of these types of nano-structured materials are capable of surviving the harsh conditions under curing, thus still being available for structural health monitoring after production of the composite bodies. Such sensors were found to exhibit a distinct sensor response when subjected to varying environments, thus allowing an effective structural health monitoring of composite bodies when embedded therein, with determination of damage in structural composite bodies.

In case of using graphene nanoplatelets and carbon nanotubes as electrically conductive material, the monitoring of the curing as well as the monitoring of the structural health may be done by measuring the resistance of the chemically modified or unmodified graphene nanoplatelets or the chemically modified or unmodified carbon nanotubes.

Such measuring of resistance, respectively of the conductivity, has turned out as being the more sensitive variant and overall better measurement parameter when using graphene platelets or carbon nanotubes as nano-structured, conductive material. Thus, in these cases, DC may be used for probing a corresponding sensor. Throughout this specification, the term "resistance" of course specifies an "ohmic resistance".

In a particular preferred embodiment of the method, a paper having a Gurley porosity according to ISO 536-5:2013 of 10 s or less may be used as the paper substrate.

By using paper with such high porosity within the given porosity range as paper substrate for coating or printing the nano-structured, conductive material thereon, both the adhesion of the nano-structured material to the paper substrate as well as the bonding of the sensor within the thermosetting resin, respectively the thermoset polymer of the composite body is believed to be enhanced. This measure therefore may help the sensor, in particular the nano-structured material coated thereon survive the harsh conditions under curing on the one hand, and on the other hand also may help preserving or even enhancing the mechanical properties of the structural composite bodies themselves.

Furthermore, it may be of advantage, if a paper having a grammage of 20 g/m$^2$ to 70 g/m$^2$ is used as the paper substrate.

Such lightweight paper within the given grammage range is particularly suited as paper substrate, since the grammage is high enough to allow for secure handling when positioning the sensor within the shaped body of the curable, thermosetting resin composition during production of the composite bodies, yet also allows for preserving or enhancing the mechanical properties of the structural composite bodies.

Another embodiment of the method may comprise, that at least 2 different curable resins are used to produce the structural composite body.

Such procedure in general allows for tuning of the mechanical properties of structural composite bodies, wherein for example the crosslinking density may vary significantly when such thermosets blends are prepared. Also, the polymerization or curing reactions of two curable resins may differ due to divergent chemistries. In this regard, the monitoring of the curing with the sensors may not merely provide information on degree of cure for example, but may also be able to provide insight on phase separation and an amount of unreacted monomers.

A further embodiment may comprise, that the conductively connecting of the nano-structured conductive material with two electrodes is carried out by coating or printing the two electrodes onto the paper substrate.

Such coating or printing the electrodes onto the paper substrate is a convenient way to ensure a good electrical contact to the nano-structured, conductive material. Therefore, any kind of disruption in the measured impedance or resistance signals can effectively impeded by this measure. Such coating or printing the two electrodes onto the paper substrate may be carried out before or after the coating or printing the aqueous composition comprising the nano-structured material onto the paper substrate. Preferably, the two electrodes may be coated or printed onto paper substrate before the aqueous composition comprising the nano-structured material is applied.

In principle, the conductive coupling of the two electrodes with the measuring device can be established by any means known today or in the future, and can in principle be wire-based or established in a wireless manner, such as for example by means of an inductive coupling.

In an embodiment of the method, it may however be expedient, that for conductively coupling

a measuring device with the two electrodes, the two electrodes are conductively connected with respective conducting wires prior to positioning-the sensor within the shaped body of the curable resin composition,

and that the sensor is positioned within the shaped body of the curable resin composition such that the respective conducting wires jut out of the shaped body of the curable resin composition,

wherein the conducting wires jutting out of the shaped body are hard-wired to the measuring device.

This provides an easy to execute, yet failure secure measure to establish the electrically conductive coupling of the sensor to the measuring device. The conducting wires conductively connected to the two electrodes may directly be connected with corresponding inputs and outputs for probing AC or DC of the measuring device, but may also be connected to probing wires already hard-wired to such inputs and outputs of a measuring device for measuring impedance or resistance/conductivity.

The objective of the invention is also solved by providing a structural composite body comprising one or more thermoset polymer(s), which may in particular have been produced by corresponding production measures disclosed within the method described within this specification.

Within the structural composite body a sensor is arranged. This sensor comprises a paper substrate coated or printed with a nano-structured, conductive material, which nano-structured, conductive material consists of a polyaniline-based polymer, or chemically modified or unmodified graphene nanoplatelets, or chemically modified or unmodified carbon nanotubes, wherein said nano-structured, conductive material is conductively connected with two electrodes. Thereby the sensor is arranged within the structural composite body such that the electrodes can be conductively coupled with a measuring device for measuring impedance or resistance of the nano-structured, conductive material.

When the structural composite body has been produced by the corresponding method measures disclosed within this specification, functionality and structural integrity directly after production can be assumed with high certainty, since the curing of the curable resin composition has been monitored. The structural health or integrity of the composite body however can also be monitored at any time after production, for example by means of the method measures related to this monitoring after production within this specification. The advantages when using such structural composite body according to the invention have already been described above in context with the method.

To provide a better understanding, the invention is described in more detail in the following with reference to the appended figures.

The figures illustrate the following:

Fig. 1     A schematic drawing of an exemplary embodiment for preparing, respectively providing a sensor;

Fig. 2     A highly simplified, out of scale and schematic drawing of reinforcements and a sensor embedded in a shaped body of a curable resin composition, the sensor being conductively coupled with a measuring device for monitoring of curing;

Fig. 3     A highly simplified, out of scale and schematic drawing of reinforcements and a sensor embedded in a structural composite body , the sensor being conductively coupled with a measuring device for monitoring the structural health of the structural composite body;

Fig. 4     A graph showing measurement results from monitoring of curing of a curable resin composition;

Fig.5     Another graph showing measurement results from monitoring of curing of a curable resin composition;

Fig. 6     Another graph showing measurement results from monitoring of curing of a curable resin composition;

Fig. 7     A graph showing results of tensile tests of several structural composite bodies;

Fig. 8     A graph showing results of bending tests of several structural composite bodies;

Fig. 9     A graph showing measurement results from tests including immersion of a defect-free structural composite body into water;

Fig. 10A     graph showing measurement results from tests including immersion of a defective structural composite body into water;

Fig. 11     Graphs showing measurement results from tests with defective structural composite bodies in a humidity test chamber.

Fig. 12A     graph showing measurement results from another test with defective structural composite body in a humidity test chamber.

The invention comprises production of structural composite bodies with monitoring of curing during production, as well as monitoring structural health, respectively structural integrity of the structural composite bodies after production, respectively during use of the structural composite bodies. For production of the structural composite bodies, a sensor is prepared, which sensor is provided for embedding within a shaped body of a curable resin composition.

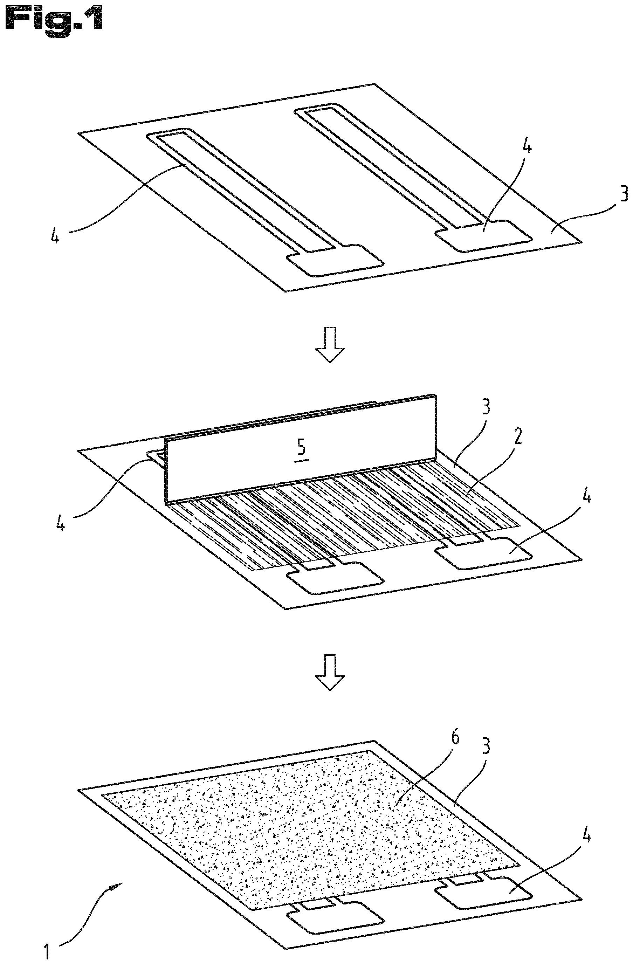

In Fig. 1 an exemplary embodiment for a possible preparation of a sensor 1 is depicted in a simplified, schematic view. As can be seen from Fig. 1, a sensor 1 is provided by coating or printing an aqueous composition 2 comprising a nano-structured, conductive material onto a paper substrate 3. In the exemplary embodiment shown in Fig. 1, the paper substrate 3 has been coated or printed with two electrodes 4 prior to coating or printing the aqueous composition 2 comprising the nano-structured, conductive material thereon. In the alternative, the two electrodes 4 may be coated or printed after coating the aqueous composition 2 onto the paper substrate 3 of course.

The two electrodes 4 may consist of basically any material(s) exhibiting a sufficient electrical conductivity to enable resistance or impedance measurements with high enough sensitivity, wherein highly conductive metal materials, such as copper, gold or silver are preferred. In particular, the two electrodes 4 may primarily consist of silver.

As can further be seen from the exemplary embodiment for producing the sensor 1 depicted in the scheme of Fig. 1, the aqueous composition 2 comprising the nano-structured, conductive material may be coated onto the paper substrate 3 by means of the technique of doctor blading, wherein a blade 5 is used to brush the aqueous composition 2 onto the paper substrate 3. As commonly known in the art, doctor blading is a convenient method for coating compositions, resulting in coatings with very smooth coating surfaces. However, any other coating or printing methods suitable for applying aqueous liquids onto substrates are also possible, like for example spraying, roller coating, dip coating, or ink jet printing, respectively.

The paper substrate 3 may for example be a cellulose fibre-based paper type. The paper substrate 3 may however also include fibre materials other than cellulose fibres, as well as additional additives commonly known in the paper art. Preferably, the paper substrate 3 is highly porous. For example, a paper having a Gurley porosity according to ISO 536-5:2013 of 10 s or less may be used as the paper substrate 3. Furthermore, a paper having a grammage of 20 $g/m^2$ to 70 $g/m^2$ may be used as the paper substrate 3.

After coating, for example doctor blading as depicted in the exemplary embodiment shown in Fig. 1, the aqueous composition 2 comprising the nano-structured material may be dried or allowed to dry, resulting in a sensor 1 comprising a paper substrate 3 coated with the nano-structured, conductive material 6 thereon. As can be seen from Fig. 1, the nano-structured conductive material 6 is conductively connected with the two electrodes 4 upon coating (or printing) the nano-structured material 6 onto the paper substrate 3 and drying.

The nano-structured, conductive material 6 consists of a poly aniline-based polymer, or chemically modified or unmodified graphene nanoplatelets, or chemically modified or unmodified carbon nanotubes. Regarding polyaniline-based polymers, it is well known in the art, that these polyaniline-based polymers typically exhibit a nanorod-like morphology, so that the nano-structured, conductive material may consist of chemically modified or unmodified polyaniline nanorods.

It may be convenient to provide, respectively make the sensor 1 by coating an aqueous composition 2 comprising a polyaniline-based polymer as the nano-structured, conductive material 6 onto the paper substrate 3. If a polyaniline-based polymer is used as the nano-structured, conductive material 6, the monitoring of the curing as well as the monitoring of the structural health as mentioned above may be done by measuring the impedance of the polyaniline-based polymer.

In particular, the sensor 1 may be provided by coating an aqueous composition 2 comprising polyaniline modified with a surfactant onto the paper substrate 3. Preferably sodium dodecyl sulfate may be used as surfactant for modifying the polyaniline. In such case, the polyaniline may be modified with an amount of sodium dodecyl sulfate of 0,5 wt.% to 3 wt.%, preferably 1 wt.% to 2 wt.%, based on 100 wt.% total of modified polyaniline.

Furthermore, the sensor 1 may be provided by coating an aqueous composition 2 comprising the poly aniline-based polymer and a polymeric binder in a weight ratio of 4:1 to 6:1 onto the paper substrate 3. Thereby polyethylene glycol may preferably be used as the polymeric binder.

The sensor 1 may however also be provided by coating or printing an aqueous composition 2 comprising chemically modified or unmodified graphene nanoplatelets as the nano-structured, conductive material 6, or by coating or printing an aqueous composition 2 comprising chemically modified or unmodified carbon nanotubes as the nano-structured, conductive material 6 onto the paper substrate 3. Preferably the sensor 1 may be provided or made by coating an aqueous composition 2 of graphene nanoplatelets modified with a surfactant, most preferably graphene nanoplatelets modified with sodium dodecyl sulfate, onto the paper substrate 3, or by coating an aqueous composition 2 comprising carbon nanotubes modified with a surfactant, most preferably carbon nanotubes modified with sodium dodecyl sulfate, onto the paper substrate 3.

In case of using chemically modified or unmodified graphene nanoplatelets or chemically modified or unmodified carbon nanotubes as the nano-structured, conductive material 6, the above mentioned monitoring of the curing as well as the monitoring of the structural health may preferably be done by measuring the resistance of the chemically modified or unmodified graphene nanoplatelets or chemically modified or unmodified carbon nanotubes.

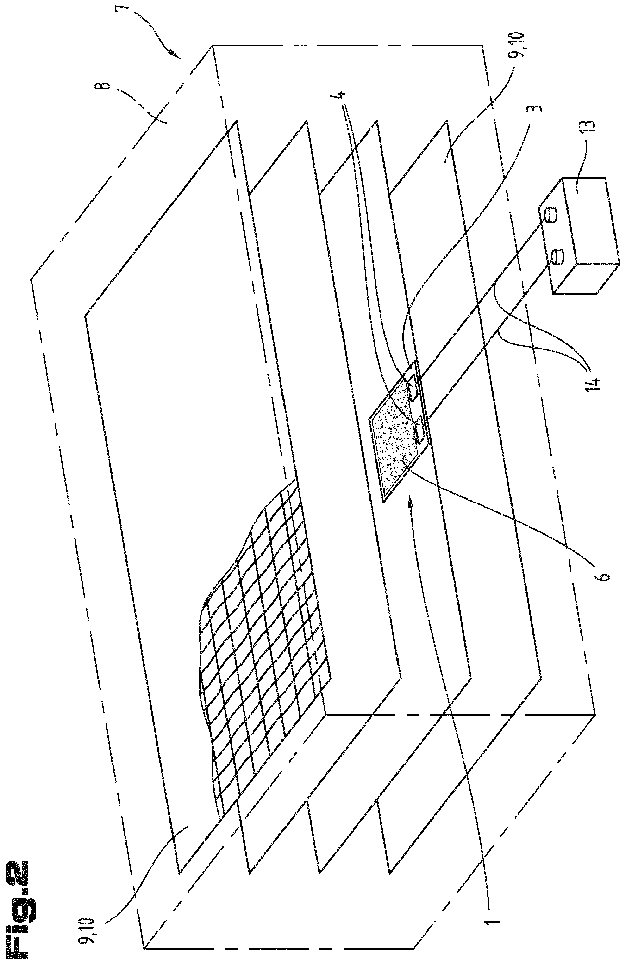

For producing the structural composite bodies, the method also comprises providing a curable or thermosetting resin composition. As can be depicted from the schematic view in Fig. 2, the method further comprises positioning or placing the sensor 1 within a shaped body 7 of the curable resin composition 8 by shaping the curable resin composition 8 and thereby surrounding the sensor 1 with the curable resin composition 8. As also can be seen from Fig. 2, in addition to the sensor 1, reinforcements 9 may also be positioned within the shaped body 7 of the curable resin composition 8 and surrounded with the curable resin composition 8. The surrounding of the sensor 1 and the reinforcements 9 with the curable resin composition 8 may typically involve a wetting or saturating the sensor 1 and the reinforcements 9 with the curable resin composition 8.

Any reinforcement(s) 9 known in the art may be positioned within the shaped body 7 of the curable resin composition 8, examples including reinforcing particles or reinforcing fibre components 10 as depicted in Fig. 2. As is known in the art, reinforcing particles may for example comprise metal particles, while fibre components may for example comprise glass fibre, carbon fibre or natural fibre components or tissues. Further, practically any curable/thermosetting resin composition 8 known in the art may be used for producing the structural composite bodies. The curable resin composition 8 comprises at least one curable, thermosetting resin, which results in one thermoset polymer upon curing. The curable or thermosetting resin composition 8 however may also contain more than one curable/thermosetting resin component. Examples for suitable thermosetting/curable resins include but are not limited to polyester resins, polyurethanes, melamine resins and/or epoxy resins. The overall amount of curable resin composition 8 used to shape the shaped body 7 and to produce the structural composite bodies, in particular also in relation to the amount of reinforcement(s) 9 used, may vary widely, basically depending on desired properties and the intended application of a specific structural composite body. It may be convenient to use at least 2 different curable resins to produce the structural composite bodies.

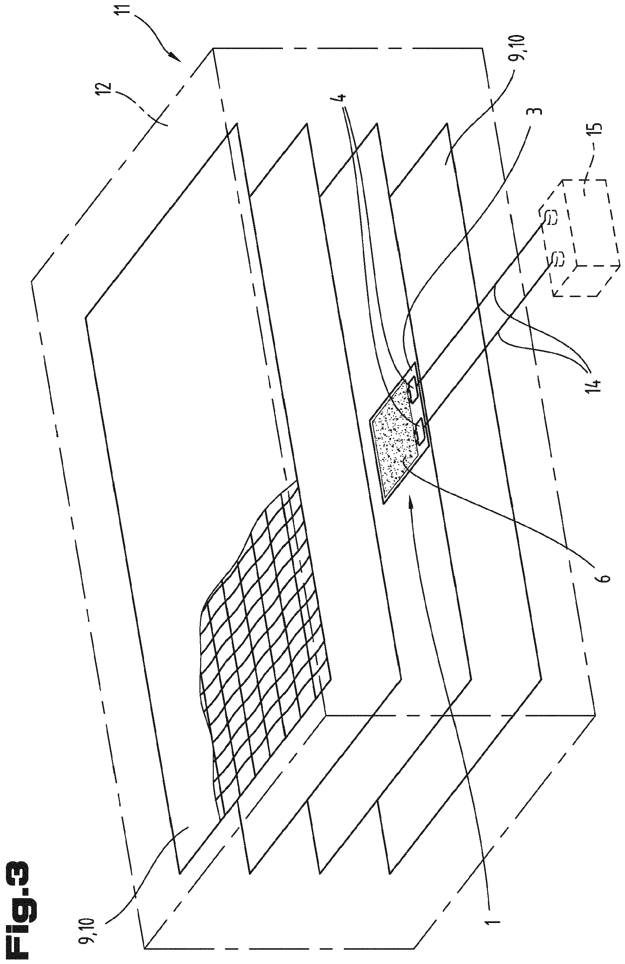

The shaping of the shaped body 7 may be made by means of any technique known in the art. Examples for suitable techniques non-exclusively include hand layup, casting, one or two mould moulding, compression moulding, transfer moulding, autoclave moulding or vacuum infusion. Shaped bodies 8 may be shaped to practically any geometric form desired, in Fig. 2 and Fig. 3 a rectangular geometry of the bodies 8, 12 is shown for reasons of simplicity merely. Further, the depictions in Fig. 2 and Fig. 3 are just simplified, schematic drawings in order to provide a clearer understanding of the invention. It should be noted, that elements within these drawings may be illustrated to a certain extent out of scale and/or on an enlarged scale and/or on a reduced scale, of course.

In principle, the sensor 1 may be positioned anywhere within the shaped body 7 of the curable resin composition 8. In order to allow for efficient monitoring of structural health of a composite body explained below, the sensor 1 preferably is positioned at an area within a shaped body 7, which area is under particular high risk of defects or failure during use of a structural composite body, for example an area under high load. In general, the sensor is preferably positioned in the vicinity of an outer perimeter of a shaped body within the shaped body.

Further, the method comprises curing the curable resin composition 8 to produce a structural composite body 11 comprising one or more thermoset polymer(s) (12), see Fig. 3.

Returning to Fig. 2, it is highly simplified and schematically shown, that during curing of the curable resin composition 8 a measuring device 13 for measuring impedance or resistance is conductively coupled with the two electrodes 4. Thereby the method during curing of the curable resin composition 8 comprises monitoring of the curing by continuously or consecutively measuring an ion viscosity dependent impedance or resistance of the nano-structured, conductive material 6 of the sensor 1.

In this context it is known by having ordinary skill in the art, that ion viscosity is directly related, respectively proportional to the mobility of ions and dipoles in resin compositions. Since the mobility of charges and/or dipoles comprising molecules impacts the impedance or conductivity/resistance of the nano-structured, conductive material, the decrease in ion viscosity in course of curing of the curable resin composition is also directly related to changes in impedance or conductivity of the nano-structured, conductive material, which will be demonstrated beneath in context with several examples.

In the exemplary embodiment shown in Fig. 2, for conductively coupling a measuring device 13 with the two electrodes 4, the two electrodes 4 may be conductively connected with respective conducting wires 14 prior to positioning the sensor 1 within the shaped body 7 of the curable resin composition 8. Such conducting wires 14 can for example be soldered to the two electrodes 4 and therefore may consist of the same or at least a similar material as the electrodes 4, such as copper, gold or preferably silver.

As can further be seen in Fig. 2, the sensor 1 may be positioned within the shaped body 7 of the curable resin composition 8 such that the respective conducting wires 14 jut out of the shaped body 7 of the curable resin composition 8, and the conducting wires 14 jutting out of the shaped body 7 may be hard-wired to the measuring device 13. The conducting wires 14 conductively connected to the two electrodes 4 may directly be connected with corresponding inputs and outputs for probing AC or DC of the measuring device 13 as shown in Fig. 2. Alternatively, the conducting wires 14 may also be connected to probing wires already hard-wired to such inputs and outputs of a measuring device 13 for measuring impedance or resistance/conductivity. In case of measuring impedance, AC may be used for probing the sensor 1 during curing, whereas in case of measuring resistance, DC may be used of course.

In contrast to the wire-based coupling embodiment shown in Fig. 2, the conductively coupling of a measuring device 13 with the two electrodes 4 may alternatively also be established by wireless means, for example by means of inductive coupling.

Referring now to Fig. 3, an exemplary embodiment of a structural composite body 11 comprising one or more thermoset polymer(s) (12) is shown here. The structural composite body 11 shown in Fig. 3 may thereby have been produced by means of any of the production related embodiments of the method described within this specification, for example the corresponding measures described above in context with Fig. 1 and Fig. 2. The thermoset polymer (s) 12 may thus have been produced by curing the curable resin composition 8 shown in Fig. 2. The structural composite body 11 may comprise any amount of thermoset polymer(s) suitable for its intended use. For example, the structural composite body 11 may comprise one or more thermoset polymer(s) in amount of more than 50 wt. %, more than 70 wt. % or more than 90 wt. %.

As can be seen in Fig. 3, a sensor 1 is arranged within the structural composite body 11. the sensor 1 comprises a paper substrate 3 coated or printed with a nano-structured, conductive material 6 consisting of a polyaniline-based polymer or chemically modified or unmodified graphene nanoplatelets or chemically modified or unmodified carbon nanotubes. Said nano-structured, conductive material 6 is conductively connected with two electrodes 4. The sensor 1 is arranged within the structural composite body 11 such that the electrodes 4 can be conductively coupled with a measuring device 13, 15 for measuring impedance or resistance of the nano-structured, conductive material 6 for monitoring the structural health of the structural composite body 11.

The measuring device 13, 15 shown in Fig. 3 may be the same measuring device 13 used for monitoring the curing within the method of this specification as described above in context with Fig. 2. In such case, such measuring device 13 may for example be permanently attached or linked to the structural composite body 11.

It may however be more convenient, to conductively couple a measuring device 13, 15 with the two electrodes 4 for monitoring the structural health of the composite body 11 on demand. In such case, a measuring device 15 used for any specific monitoring of structural health may be a different one as used for any prior monitoring of structural health or the measuring device 13 used for monitoring of the curing during production of the structural composite body 11.

The method of this specification thus also comprises monitoring the structural health of the structural composite body 11 by continuously or consecutively measuring a moisture or humidity dependent impedance or resistance of the nano-structured, conductive material 6 of the sensor 1 by means of a measuring device 13, 15 for measuring impedance or resistance, after the curing of the curable resin composition 8 any time or continuously during the lifetime of a structural composite body 11. The measuring device 13, 15 thereby is conductively coupled with the two electrodes 4 as depicted in Fig. 3.

As already in case of the embodiment shown in Fig. 2, the embodiment shown in Fig. 3 also may comprise conducting wires 14 hard-wired to the two electrodes 4 for conductively coupling with a measuring device 13, 15 for measuring impedance or resistance. A wire-less conductive coupling for monitoring structural health, respectively structural integrity of a structural composite body 11 is also possible however, as already mentioned above in context with the monitoring of the curing.

Examples/Experimental/Results:

Various experiments/tests were made to evaluate the capability of use of sensors according to this specification for monitoring of the curing of shaped bodies as well as monitoring of structural health of structural composite bodies after curing, which will be described in the following.

Sensor:

Several nano-structured, conductive materials were used for the tests/experiments, including poly aniline nanorods, graphene nanoplatelets and carbon nanotubes. While chemically unmodified could be shown to be usable and effective for the purpose of the double-monitoring, chemically modified nano-structured, conductive materials showed better properties than their unmodified counterparts. Particularly nano-structured, conductive materials modified with surfactants showed better electrical properties, such as better sensitivity, response and recovery times. Thereby sodium dodecyl sulfate, respectively sodium lauryl sulfate was found to be a suitable and highly effective surfactant for modifying the nano-structured, conductive materials. Thus, the following description utilizes methods and results from tests which are believed to be the best mode of the invention. Since a limited number of experiments/tests have been conducted of course, it cannot be excluded, that other variants than those described in the following may show similar over even better results.

Polyaniline (PANI) modified with sodium dodecyl sulfate (SDS) was prepared by dropwise addition of 4 mL of aniline to 4 mL of 10 wt. % HCl in a porcelain mortar cooled with ice. The reactants were grinded for 5 minutes and then different amounts of sodium dodecyl sulfate were added. Good results and homogenous nanorod structures of modified polyaniline were obtained by adding 0,2 g to 0,5 g of sodium dodecyl sulfate to the mixture, wherein results presented hereafter were primarily obtained by adding approximately 0,25 g of sodium dodecyl sulfate. Next 8 g of ammonium persulfate were added and the mixture in the mortar was again grinded until it turned dark green in color. Then the mixture was washed several times with ethanol and deionized water until a neutral pH was reached followed by drying in an oven for 12 h at 60 °C. The modified polyaniline prepared as described showed very homogenous, nanorod morphology in high resolution transmission electron microscope (HRTEM) images. Other methods for preparing surfactant-modified polyaniline may also be suitable of course.

The procedure for preparing graphene nanoplatelets and carbon nanotubes was basically the same:

Graphene nanoplatelets were supplied by XG sciences, United States with a purity of 95 %. Carbon nanotubes (CNT; NC 7000) was purchased from Nanocyl, Germany. For washing and removing impurities the graphene nanoplatelets or carbon nanotubes respectively were added to 10 wt.% HCl followed by washing with deionized water several times and drying in an oven for 8 h at 80 °C. For chemical modifying, sodium dodecyl sulfate (SDS) in an amount of approximately 2 wt% based on the weight of graphene nanoplatelets or carbon nanotubes respectively was dissolved in deionized water in each case, and then graphene nanoplatelets or carbon nanotubes respectively were added to the solution. The respective reactive mixtures were heated with an oil bath under continuously stirring for 8 h at 70 °C. Then, the respective solution mixtures were filtered and washed several times with water and dried in an oven for 8 h at 80 °C.

For preparation of the sensors doctor blade technique was applied for coating paper substrates, wherein the procedure was similar for the sensors based on poly aniline, graphene nanoplatelets or carbon nanotubes. Prior to coating, 0,1 g of polyethylene glycol (PEG) was dissolved in deionized water (5 mL) followed by adding 0,5 g of one of the above described, chemically modified nano-structured, conductive materials respectively, i.e. modified polyaniline, modified graphene nanoplatelets or modified carbon nanotubes, respectively. The resultant thick pastes were directly coated in 4 layers each onto paper substrates, which paper substrates were printed with silver electrodes already. For various testing procedures regarding mechanical properties of structural bodies, paper substrates with different grammages were used. Gurley porosities according to ISO 536-5:2013 of the paper substrates used were in the range of 5 s to 7 s. The silver electrodes of the sensors were connected with single strand silver wires by soldering prior to embedding the sensors within curable resin compositions for testing.

Aniline, ammonium persulfate (APS) and HCl were supplied by Roth chemicals Germany. Polyethylene glycol (PEG, average molecular weight of 8000 g/mol) was supplied by Sigma Aldrich, Austria. Sodium dodecyl sulfate (SDS) was supplied by Alfa Aesar, Austria. High porous paper substrates pre-printed with silver electrodes were supplied by Mettler-Toledo GmbH, Austria.

Experiments, tests and results:

For preparing shaped bodies of curable resin with embedded sensors and embedded reinforcements, a bio-based epoxy resin - SR green 810 - and a hardener - SD8822 - were used as curable resin composition or matrix material, respectively. As reinforcements, short hemp fibre tissues (Schwarzwalder textiles GmbH, Germany) were used. The loadings of hemp fibres were 20 wt. %, based on total weight of the epoxy resin and hardener. The curable resin compositions were each prepared by mixing SR green 810 (epoxy resin) and hardener (SD8822) in a weight-ratio of 100:33. Shaped bodies comprising the matrix material/curable resin composition (epoxy resin + hardener) with embedded reinforcements (hemp fibres) and embedded sensors were prepared by means of vacuum infusion technique using pressure plates. The resultant shaped bodies had a rectangular geometry with dimensions of about 40 cm x 30 cm x 0,2 cm, wherein the sensors were embedded within the curable resin composition with the silver conducting wires connected/soldered to the silver electrodes printed on the paper substrates which silver conducting wires jutted out of the shaped bodies.

Curing:

To evaluate the capability of monitoring the curing, the silver conducting wires jutting out of the shaped bodies with embedded sensors prepared by vacuum infusion as described above were conductively coupled/connected to a measurement device capable of measuring resistance (resistance meter with PC interface, Benning MM12, Germany) and impedance (Impedance analyzer (Novocontrol Technologies GmbH & Co. KG, Germany), respectively. The matrix material, i.e. the curable epoxy resin composition as described above, of the respective shaped bodies was then cured while probing the sensors with AC or DC, respectively.

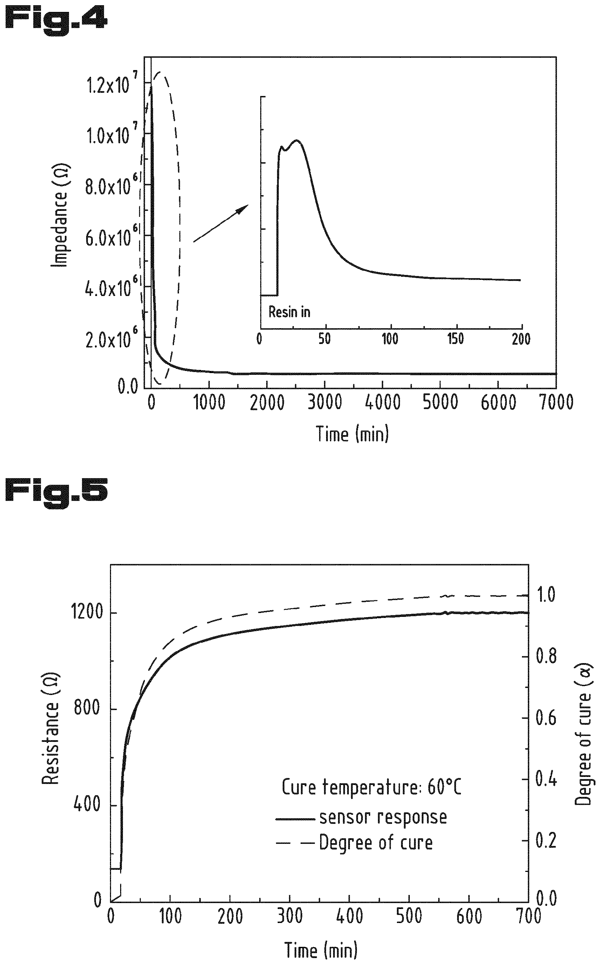

Fig. 4 exemplarily shows the impedance sensor signal of a sensor having chemically modified (sodium dodecyl sulfate modified) polyaniline-based polymer prepared as described above coated on a paper substrate, upon injection of the curable resin composition by means of the vacuum infusion process and during curing of the curable epoxy resin composition at 60°C thereafter, over time. As can be depicted from Fig. 4, the corresponding, polyaniline polymerbased sensor readily responded upon injection of the epoxy resin composition during vacuum infusion, and also allowed for monitoring of the curing of the epoxy resin composition.

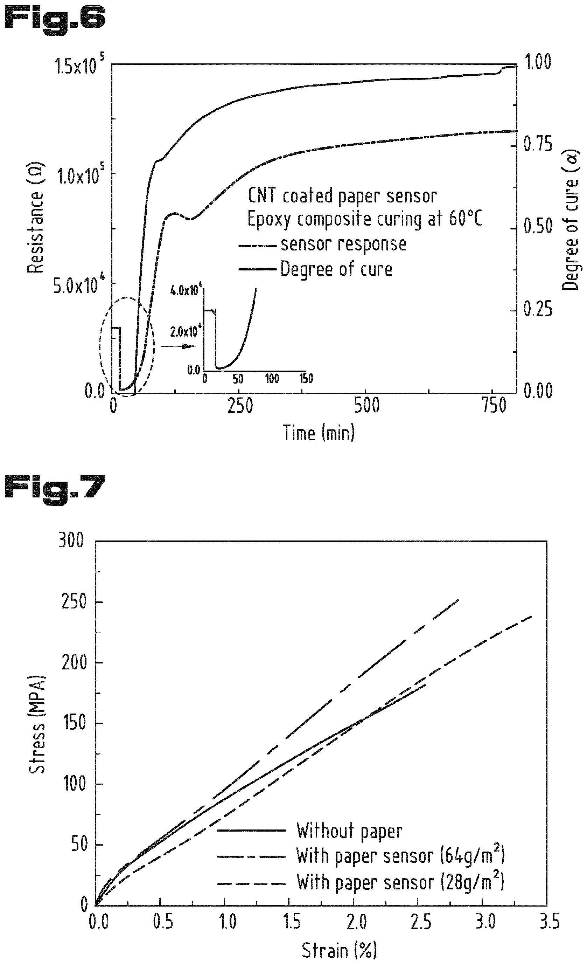

Fig. 5 exemplarily shows the resistance sensor signal of a sensor having chemically modified graphene nanoplatelets prepared as described above coated on a paper substrate, during curing of the curable epoxy resin composition at 60°C, over time. Fig. 6 exemplarily shows the resistance sensor signal of a sensor having chemically modified carbon nanotubes prepared as described above coated on a paper substrate, also during curing of the curable epoxy resin composition at 60°C, over time.

Like in case of the sensor response (impedance signal) for the polyaniline-based sensor shown in Fig. 4, the graphene nanoplatelet-based sensors as well as the carbon nanotube-based sensors also showed a high sensitivity of the resistance signals during curing as well as can be seen from Fig. 5 and 6. The degrees of cure ($\alpha$) values depicted in Fig. 5 and 6 can be calculated out of the contemporaneous resistance values of the sensors according to the following formula:

$$\alpha = \frac{\mathrm{Log}\,R_i - \mathrm{Log}\,R_t}{\mathrm{Log}\,R_i - \mathrm{Log}\,R_\infty} \times 100$$

Hereby Ri means Resistance at time (t) = 0, Rt means Resistance at time "t" and R∞ means Resistance at time "∞".

Similarly, the impedance signals of the modified polyaniline-based sensors can be converted to degree of cure values ($\alpha$) by the following formula:

$$\alpha = \frac{Log\,Z_i - Log\,Z_t}{Log\,Z_i - Log\,Z_\infty} \times 100$$

Hereby Zi means Impedance at time (t) = 0, Zt means Impedance at time "t" and Z∞ means Impedance at time "∞".

Mechanical properties of structural composite bodies:

For evaluating any influence of the embedded sensors on the mechanical properties of the respective structural composite bodies, structural composite bodies with and without embedded sensors were prepared by shaping and curing the respective resin compositions as described above, and subjected to tensile and bending tests. The tests were carried out using universal testing machine (Zwick Roell Z020) according to EN ISO-527-4 and EN ISO-178 for tensile and bending tests, respectively. For the structural composite bodies with embedded sensors, sensors were prepared by coating modified polyaniline as described above onto paper substrates having varying grammage.

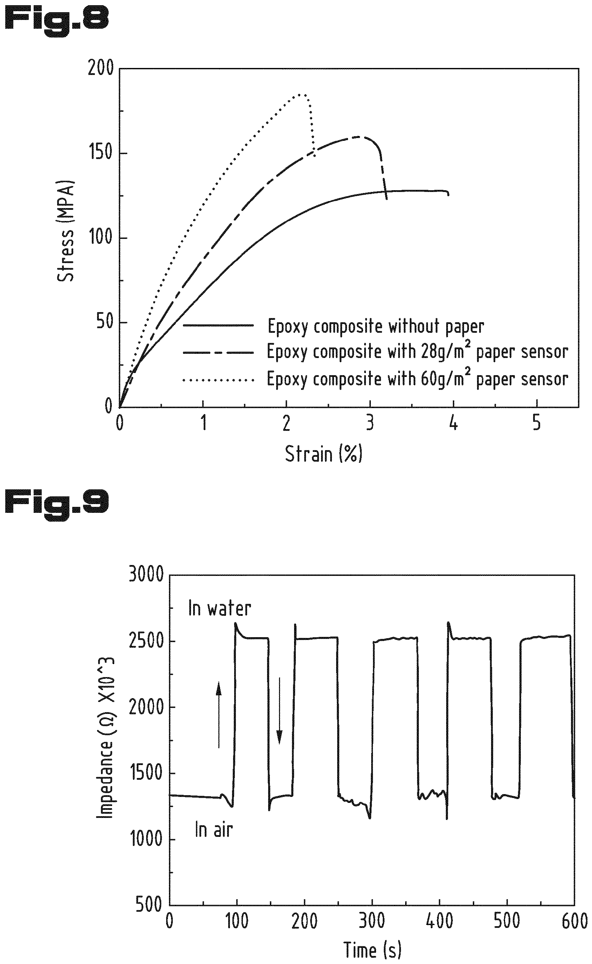

Fig. 7 shows exemplary results from such tensile tests of a structural composite body without embedded sensor and structural composite bodies with embedded sensors having paper substrates of different grammage. Similarly, Fig. 8 depicts such results from bending tests.

As can be seen from both Fig. 7 and 8, the integration of the sensors within structural composite bodies does not appear to impair the mechanical strength of the composite bodies. In the contrary, the embedded sensors even appear to augment the mechanical properties of structural composite bodies to a certain extend.

Apparently, the sensors are embedded well within the structural composite bodies. While not wanting to be bound by theory, it is believed, that apart from the high flexibility of the sensors favourable in this regard also a good (physical or even partially chemical) bonding of the sensors to the surrounding thermoset polymer(s) is involved. In this regard, strong hydrogen bonding interaction between the nano-structured, conductive materials of the sensors and the thermoset polymer(s) of the structural composite body may be included. Further, impregnation of the paper substrate by the curable resin composition during vacuum infusion may contribute to a reduction fibre and surface defects.

Monitoring of structural health:

To evaluate the capability of the embedded sensors to monitor structural health/integrity of the structural composite bodies after curing/production, several structural bodies with embedded sensors were again subjected to experimental measurements of impedance or resistance respectively. Thus, the silver conducting wires jutting out of the structural composite bodies were again conductively coupled/connected to a measurement device capable of measuring resistance (resistance meter with PC interface, Benning MM12, Germany) and impedance (Impedance analyzer (Novocontrol Technologies GmbH & Co. KG, Germany), respectively, and the sensors were probed with AC or DC respectively. To demonstrate moisture/humidity dependent changes in the impedance or resistance signals of the sensors, the respective structural bodies were either subsequently immersed and taken out of a water bath, or the measurements were carried out under varying humidity conditions in a humidity test chamber.

Fig. 9 shows exemplary results from water immersion tests of a structural composite body having no visually detectable defects. The corresponding structural composite body had a sensor with modified polyaniline as nano-structured, conductive material embedded within, thus impedance was measured in this case.

As can be seen from Fig. 9, while the sensor did show response and recovery upon repeated immersion of the structural composite body into a water bath and taking the structural composite body out of the water bath, corresponding changes in impedance of the sensor were low.

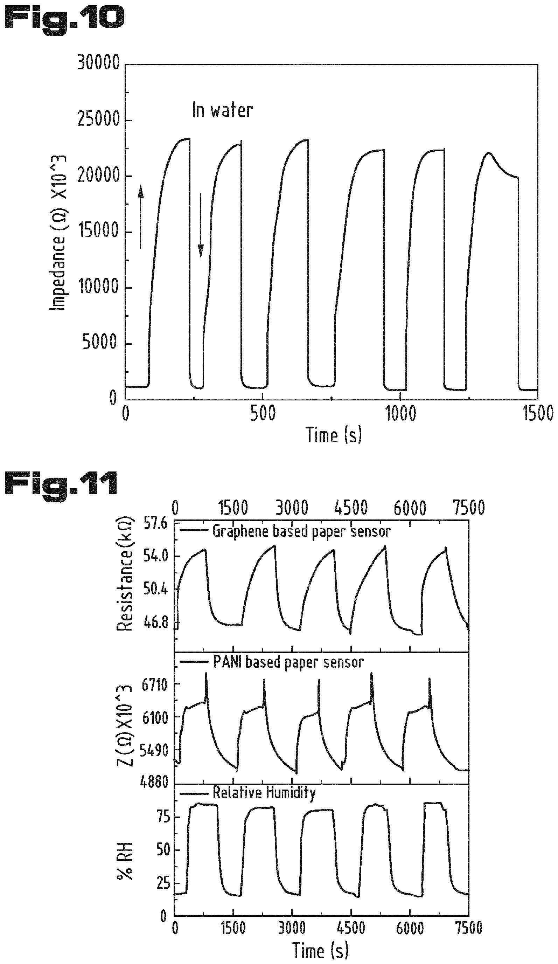

Fig. 10 on the other hand shows exemplary results from water immersion tests of a structural composite body having visually detectable defects. Those defects were created by using a drop hammer to intentionally damage the structural composite body.

When comparing the impedance data of Fig. 10 with the data of Fig. 9, it can readily be seen, the sensor embedded within the defective composite body (Fig. 10) showed much higher response, respectively much higher changes in the impedance signals, than the sensor embedded within the defect-free composite body (Fig. 9), which demonstrates the usability of such sensors for monitoring structural health/integrity of structural composite bodies incorporating such sensors.

Fig. 11 shows sensor responses of sensors embedded in defective bodies when subjected to varying humidity conditions in a humidity test chamber. In this case modified graphene nanoplatelets and modified polyaniline as described above had been used to prepare the respective sensors. In this case the defects in the structural bodies were introduced by intentionally injecting air during vacuum infusion for producing the structural body. Relative humidity within the humidity test chamber was measured by means of a reference humidity measuring device (Testo 176 HI, Austria) also positioned within the humidity test chamber.

As can be seen from Fig. 11, both the sensor based on modified graphene nanoplatelets (resistance signal) as well as the sensor based on modified polyaniline (impedance signal) readily responded to changes in relative humidity within the humidity test chamber, again demonstrating the possibility to use these sensors for monitoring of structural health of structural composite bodies.

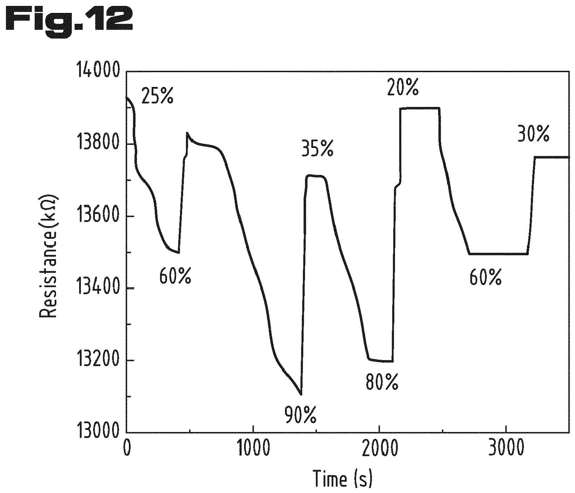

Fig. 12 finally shows measurement results from another experiment carried out in the humidity test chamber. This figure shows the response in resistance of a sensor having chemically modified carbon nanotubes as nano-structured, conductive material prepared as described above, embedded in another defective, structural composite body cured from a shaped body prepared as also described above. As explained above, the defective structural composite body with the embedded carbon nanotube-based sensor was placed in the humidity test chamber and the altered relative humidity in the test chamber during the measurement was logged with a reference humidity sensor (Testo 176 HI, Austria). The relative humidity as well as the ohmic resistance response values of the sensor over time in course of the experiment can be depicted from Fig. 12.

The embodiments illustrated as examples represent possible variants and it should be pointed out at this stage that the invention is not specifically limited to the variants specifically illustrated, and instead the individual variants may be used in different combinations with one another and these possible variations lie within the reach of the person skilled in this technical field given the disclosed technical teaching.

The protective scope is defined by the claims. However, reference may be made to the description and drawings with a view to interpreting the claims. Individual features or combinations of features from the different examples of embodiments described and illustrated may also be construed as independent embodiments of the solutions proposed by the invention. The objective underlying the individual solutions proposed by the invention may be found in the description.

For the sake of good order, finally, it should be pointed out that, in order to provide a clearer understanding of the structure, elements are illustrated to a certain extent out of scale and/or on an enlarged scale and/or on a reduced scale.

## List of references

1    Sensor
2    Aqueous composition
3    Paper substrate
4    Electrode
5    Blade

6    Material
7    Shaped body
8    Resin composition
9    Reinforcement
10   Fibre component

11   Composite body
12   Thermoset polymer(s)
13   Measuring device
14   Conducting wire
15   Measuring device

## Claims

1. Method for producing structural composite bodies comprising one or more thermoset polymer(s) with monitoring of curing during production, and for monitoring structural health of the structural composite bodies after production, comprising

    - providing a curable resin composition (8),
    - providing a sensor (1), wherein providing this sensor (1) comprises coating or printing an aqueous composition (2) comprising a nano-structured, conductive material onto a paper substrate (3), wherein the nano-structured, conductive material (6) consists of a polyaniline-based polymer, or chemically modified or unmodified graphene nanoplatelets, or chemically modified or unmodified carbon nanotubes, and conductively connecting the nano-structured conductive material (6) with two electrodes (4),
    - positioning the sensor (1) within a shaped body (7) of the curable resin composition (8) by shaping the curable resin composition (8) and thereby surrounding the sensor (1) with the curable resin composition (8),
    - curing the curable resin composition (8) to produce a structural composite body (11), and thereby monitoring the curing by continuously or consecutively measuring an ion viscosity dependent impedance or resistance of the nano-structured, conductive material (6) of the sensor (1) during curing, by means of a measuring device (13) for measuring impedance or resistance, which measuring device (13) is conductively coupled with the two electrodes (4),
- and after the curing, monitoring the structural health of the structural composite body (11) by continuously or consecutively measuring a moisture dependent impedance or resistance of the nano-structured, conductive material (6) of the sensor (1) by means of a measuring device (13, 15) for measuring impedance or resistance, which measuring device (13, 15) is conductively coupled with the two electrodes (4).

2. Method according to claim 1, **characterized in that** the sensor (1) is provided by coating an aqueous composition (2) comprising a polyaniline-based polymer as the nano-structured, conductive material (6) onto the paper substrate (3) and that the monitoring of the curing as well as the monitoring of the structural health is done by measuring the impedance of the polyaniline-based polymer.

3. Method according to claim 2, **characterized in that** the sensor (1) is provided by coating an aqueous composition (2) comprising polyaniline modified with a surfactant onto the paper substrate (3).

4. Method according to claim 3, **characterized in that** sodium dodecyl sulfate is used as surfactant for modifying the polyaniline.

5. Method according to claim 4, **characterized in that** the polyaniline is modified with an amount of sodium dodecyl sulfate of 0,5 wt.% to 3 wt. %.

6. Method according to one of claims 2 to 5, **characterized in that** the sensor (1) is provided by coating an aqueous composition (2) comprising the polyaniline-based polymer and a polymeric binder in a weight ratio of 4:1 to 6:1 onto the paper substrate (3).

7. Method according to claim 6, **characterized in that** polyethylene glycol is used as the polymeric binder.

8. Method according to claim 1, **characterised in that** the sensor (1) is provided by coating or printing an aqueous composition (2) comprising chemically modified or unmodified graphene nanoplatelets as the nano-structured, conductive material (6), or by coating or printing an aqueous composition (2) comprising chemically modified or unmodified carbon nanotubes as the nano-structured, conductive material (6) onto the paper substrate (3).

9. Method according to claim 8, **characterized in that** the monitoring of the curing as well as the monitoring of the structural health is done by measuring the resistance of the chemically modified or unmodified graphene nanoplatelets or the chemically modified or unmodified carbon nanotubes.

10. Method according to one of the preceding claims, **characterized in that** a paper having a Gurley porosity according to ISO 536-5:2013 of 10 s or less is used as the paper substrate (3).

11. Method according to one of the preceding claims, **characterized in that** a paper having a grammage of 20 $g/m^2$ to 70 $g/m^2$ is used as the paper substrate (3).

12. Method according to one of the preceding claims, **characterized in that** at least 2 different curable resins are used to produce the structural composite body (11).

13. Method according to one of the preceding claims, **characterized in that** the conductively connecting of the nano-structured conductive material (6) with two electrodes (4) is carried out by coating or printing the two electrodes (4) onto the paper substrate (3).

14. Method according to one of the preceding claims, **characterized in that** for conductively coupling a measuring device (13, 15) with the two electrodes (4), the two electrodes (4) are conductively connected with respective conducting wires (14) prior to positioning the sensor (1) within the shaped body (7) of the curable resin composition (8),

and that the sensor (1) is positioned within the shaped body (7) of the curable resin composition (8) such that the respective conducting wires (14) jut out of the shaped body (7) of the curable resin composition (8),
wherein the conducting wires (14) jutting out of the shaped body (7) are hard-wired to the measuring device (13, 15).

15. Structural composite body (11) comprising one or more thermoset polymer(s) (12), in particular produced by corresponding production measures disclosed within the method according to any one of claims 1 to 14, **characterized in that** a sensor (1) is arranged within the structural composite body (11), the sensor (1) comprising a paper substrate (3) coated or printed with a nano-structured, conductive material (6), which nano-structured, conductive material (6) consists of a polyaniline-based polymer or chemically modified or unmodified graphene nanoplatelets or chemically modified or unmodified carbon nanotubes, wherein said nano-structured, conductive material (6) is conductively connected with two electrodes (4), wherein the sensor (1) is arranged within the structural composite body (11) such that the electrodes (4) can be conductively coupled with a measuring device (13, 15) for measuring impedance or resistance of the nano-structured, conductive material (6) for monitoring the structural health of the structural composite body (11).

# Fig.1

Fig.2

# Fig.3

EP 4 197 760 A1

# Fig.4

# Fig.5

# Fig.6

CNT coated paper sensor
Epoxy composite curing at 60°C
----- sensor response
—— Degree of cure

# Fig.7

—— Without paper
— — With paper sensor (64g/m²)
- - - With paper sensor (28g/m²)

# Fig.8

Epoxy composite without paper
Epoxy composite with 28g/m² paper sensor
Epoxy composite with 60g/m² paper sensor

# Fig.9

# Fig.10

# Fig.11

# Fig.12

Europäisches
Patentamt

European
Patent Office

Office européen
des brevets

# EUROPÄISCHER RECHERCHENBERICHT

**Nummer der Anmeldung**

EP 21 21 5725

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | CN 106 680 311 A (UNIV SHENYANG AEROSPACE)<br>17. Mai 2017 (2017-05-17)<br>*Verwendung einer maschinellen Übersetzung*<br>* Zusammenfassung *<br>* Abbildungen 1, 2 *<br>* Embodiments 1 und 2;<br>Seite 4 *<br>----- | 1,10,11,<br>13-15<br>2-9,12 | INV.<br>B29C70/88<br>G01N27/02<br>G01N27/04<br>B29C35/02<br>B29C70/54 |
| A | EP 3 064 918 A1 (UNIV SOONGSIL RES CONSORTIUM [KR])<br>7. September 2016 (2016-09-07)<br>* Absatz [0010] – Absatz [0017] *<br>----- | 1-15 | |
| A | CN 111 237 456 A (SHENYANG GAS CYLINDER SAFETY TECH CO LTD; UNIV SHENYANG AEROSPACE) 5. Juni 2020 (2020-06-05)<br>*Verwendung einer maschinellen Übersetzung*<br>* das ganze Dokument *<br>----- | 1-15 | |

RECHERCHIERTE SACHGEBIETE (IPC)

B29C
G01N

Der vorliegende Recherchenbericht wurde für alle Patentansprüche erstellt

| Recherchenort | Abschlußdatum der Recherche | Prüfer |
|---|---|---|
| Den Haag | 5. August 2022 | Wellhausen, C |

KATEGORIE DER GENANNTEN DOKUMENTE

X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
 nach dem Anmeldedatum veröffentlicht worden ist
D : in der Anmeldung angeführtes Dokument
L : aus anderen Gründen angeführtes Dokument

........................................................
& : Mitglied der gleichen Patentfamilie, übereinstimmendes
 Dokument

EPO FORM 1503 03.82 (P04C03)

Europäisches
Patentamt

European
Patent Office

Office européen
des brevets

Nummer der Anmeldung

**EP 21 21 5725**

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder
Gruppen von Erfindungen, nämlich:

**Siehe Ergänzungsblatt B**

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldung**

**EP 21 21 5725**

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

   1. Ansprüche: 1-7, 10, 11, 14, 15(vollständig); 13(teilweise)

      Sensor umfassend eine Beschichtung enthaltend ein
      Polyanilin-basiertes Polymer
                     ---


   2. Ansprüche: 8, 9(vollständig); 13(teilweise)

      Sensor umfassend eine Beschichtung enthaltend Graphen
      Nanopatelets
                     ---


   3. Anspruch: 12

      Fasererbundstruktur, umfassend einen Sensor, wobei die
      Struktur aus zwei verschiedenen, härtbaren Harzen
      hergestellt ist
                     ---

**ANHANG ZUM EUROPÄISCHEN RECHERCHENBERICHT**
**ÜBER DIE EUROPÄISCHE PATENTANMELDUNG NR.**

EP 21 21 5725

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-08-2022

| Im Recherchenbericht angeführtes Patentdokument | Datum der Veröffentlichung | Mitglied(er) der Patentfamilie | Datum der Veröffentlichung |
|---|---|---|---|
| CN 106680311 A | 17-05-2017 | KEINE | |
| EP 3064918 A1 | 07-09-2016 | CN 105938408 A | 14-09-2016 |
| | | EP 3064918 A1 | 07-09-2016 |
| | | KR 20160107453 A | 19-09-2016 |
| | | US 2016259473 A1 | 08-09-2016 |
| CN 111237456 A | 05-06-2020 | KEINE | |

EPO FORM P0461

Für nähere Einzelheiten zu diesem Anhang : siehe Amtsblatt des Europäischen Patentamts, Nr.12/82